# EUROPEAN PATENT SPECIFICATION

(11) **EP 3 725 071 B1**
(45) Date of publication and mention of the grant of the patent: **17.07.2024**
(21) Application number: 18826976.5
(22) Date of filing: 10.12.2018
(51) Int. Cl.: H04N 13/243, H04N 13/296, H04N 13/239, G06V 10/00, H04N 23/60, H04N 23/698, H04N 25/46, H04N 21/2187, H04N 21/242, H04N 21/218

(54) **CAMERAS AND ARRANGMENTS FOR SPORTS STADIUM**
KAMERAS UND ANORDNUNG FUR SPORTSTADIUM
CAMÉRAS ET LEURS AGENCEMENTS POUR UN STADE DE SPORT

(30) Priority: 12.12.2017 GB 201720650
(43) Date of publication of application: 21.10.2020
(73) Proprietor: SC IP Limited, St Helier JE1 1JY (GB)
(72) Inventor: BADALYAN, Vigen, Yerevan 0047 (AM)
(74) Representative: Burnett, Christopher James
(86) International application number: PCT/EP2018/084130
(87) International publication number: WO 2019/115441

(56) References cited:
- JP-A- 2009 177 503
- US-A1- 2002 005 902
- US-A1- 2004 036 771
- US-A1- 2006 146 132
- US-A1- 2008 129 825

## Description

### Field of the invention

The present invention relates to cameras such as video cameras and arrangement of the cameras in a sports stadium.

Especially, the present invention relates to cameras used in sports stadiums and the like, for transmitting and recording sports events. However, the arrangement of the invention described may be applied to activities other than sporting events and in other locations than sports stadiums.

### Background to the invention

Live sporting events may attract a significant following, and are often well-attended by people at the stadium itself as well as via live television broadcasts and subsequent edited highlights or review shows. In addition, a wide variety of statistics is collected during such sporting events. Such statistics may relate to, for example, the distance a particular athlete has run during a soccer match or the number of aces served during a tennis match. Some of the information collected during an event may be collated by automated means but some information requires manual recordal by a person in the stadium or watching a live feed. Such a person is sometimes referred to as a "scout".

However, in a fast-moving sporting event there may be multiple recordable events occurring in quick succession and a single scout may be insufficient to provide suitable recordal of desired information. Furthermore, it may be important for the information collected during an event to be provided as quickly as possible. This may arise, for example, if the information is to be relied upon by betting markets and the like. Such markets are fast-moving and allow betting positions to be traded. Prices in such markets may move in dependence on events taking place during a sporting event. Thus, it is important to obtain accurate information as quickly as possible.

A common known arrangement within a sports stadium or similar set up is to provide a camera in a fixed location - usually at one side of a field of view - which can be pivoted so that the field of view can be moved in accordance with action to captured for transmittal and recording. Such a camera is often controlled in real time by a camera operator whether manually or remotely. More recently, cameras have been developed which can move, using an arrangement of cables, in two or three dimensions generally above the field of view. Such cameras are generally operated remotely so that they may capture in detail action happening in differing parts of the field of view.

A recent product disclosed by Danish firm Veo provides a pair of video cameras, arranged side-by-side within a housing which is placed by a side of a football pitch, to capture footage of sporting action taking place on the pitch. The said two cameras are provided to complement each other to give a wide angle of view in order to capture as much as possible of the pitch.

US 2008/129825 A1 discloses an imaging system comprising a plurality of Pan/Tilt/Zoom cameras for tracking objects in a sports stadium. A location device is fitted in each object and used for determining the coordinate data for each tracked object.

US 2004/036771 A1 discloses an array of cameras which is disposed above an ice rink. The images captured by the different cameras are timestamped. For each time instant to be replayed, the images from all cameras are merged into a single image, which is displayed on a monitor.

US 2006/146132 A1 discloses a plurality of cameras arranged serially along a field of action (e.g horse race), such that the field of vision of one camera is interlaced with the field of vision of one or more adjacent cameras.

US 2002/005902 A1 discloses at least two cameras, a master camera operating in a wide angle mode which covers the entire scene corresponding to a sporting event in a stadium and a slave camera operating in a zoom-in mode. The master camera tracks the target using image recognition and the slave camera records the target at close-up angles, according to the coordinated of the target, transmitted by the master camera.

JP2009 177503 A relates to a digital camera that divides a shooting screen into a plurality of areas and tracks a subject by determining a target area within the shooting screen.

### Summary of the invention

The present invention relates to a sports stadium having an imaging system according to claim 1.

Thus, for an object located in a coincident portion of a field of view, the processing unit will normally be able to estimate the location of said object within the arena at a given time corresponding to a time marker.

The cameras may be arranged at discrete locations substantially within or adjacent the arena.

The cameras are arranged relatively closely adjacent one another. The cameras may be arranged adjacent one another substantially parallel to an edge of the arena.

The cameras are arranged so that each camera has substantially the whole arena within the field of view of each discrete camera. In such an arrangement, the camera may be selected to be of the wide-angle view type.

The arena is divided into a set of notional subdivisions. There are three cameras to provide at least two coincident portions of fields of view including substantially every notional subdivision of the arena. Thus, for any selected time marker, for any object located within the arena there will normally be at least two discrete images of the object captured from different locations. Thus, for any selected time marker the processing unit will normally be able to estimate the location of an object within the arena.

The arena may be a three-dimensional space. Thus in a sports stadium in which the sport may have elements of action in three dimensions, an object may be located by the arrangement substantially in any part of the arena.

Different sports or activities may involve arenas of different overall shape and size. For example, a tennis court is relatively smaller in length and breadth than a football or rugby field. A rugby match may require a taller arena than for a football match because it may be desirable to locate the ball as it ascends and descends during a particular play such as a try conversion or a drop kick.

Thus, the number and characteristics of cameras required, their preferred location and the size of their field of view is likely to vary in dependence on the application of the present invention to a particular set of circumstances. For example, if the cameras have wide-angle capabilities then fewer cameras overall may be needed to provide suitable coverage of a particular arena. Suitably, cameras may be selected for their focal length. Video cameras usually produce images at a rate measured in frames per second. The preferred number of frames per second is likely to depend on the speed at which objects are likely to move within the arena which in turn is likely to depend on what sport or other activity is taking place.

It is worth noting that while the above description has made reference to balls as used in sport, the present invention is not limited to producing images and estimating the location of balls and the present invention may be applied to a wide range of objects which are relevant to the activity being addressed. For example, in a sports match the present invention may be applied to players of the sport, implements used in the sport or pucks, shuttlecocks and the like as well as the ball in play.

The processing unit may comprise a programmable electronic computer. The processing unit may further comprise software adapted to derive an estimated location of an object by triangulation.

The processing unit may further be adapted to collate images according to the time marker associated with said images to generate a complex impression of at least a portion of the arena. The processing unit may thus be able to provide detailed data and/or information regarding the location of one or more objects within the said arena for a given time marker. Such data and/or information may be provided in real time or stored for subsequent retrieval and/or analysis.

The timer unit in one or more of the cameras may be connected to the processing unit. The processing unit may send and/or receive a signal to and/or from the said timer unit. Thus, the processing unit may provide a means for synchronising the timer unit of different cameras so that their respective time markers are synchronised.

The arrangement of the present invention may further comprise a central clock, adapted to provide a time signal or synchronising signal to a timer unit of one or more cameras and/or to the processing unit.

The cameras and processing unit may be connected together within a communications network. The central clock may be connected to one or more cameras and/or the processing unit within a communications network. Such a communications network may comprise wired connections or wireless connections or a combination of wired and wireless connections.

The processing unit may be adapted to receive information from other devices via a communications network. There may be devices located within or closely adjacent the arena. Such devices may include GPS trackers and the like, fitness trackers and/or other beacons adapted to transmit information via a communications network. Thus, the arrangement of the present invention may complement information derived from the cameras with information communicated by other devices.

### Detailed description of an embodiment of the present invention

An example of an arrangement embodying the present invention will now be described in relation to
Figure 1 which is a perspective view of an arrangement of cameras directed at a portion of a hockey arena;
Figure 2 which is a diagrammatic view of a hockey arena showing an example of cameras organised according to the present invention; and
Figure 3 which is an example of a selection of views taken from cameras part of an arrangement of the present invention.

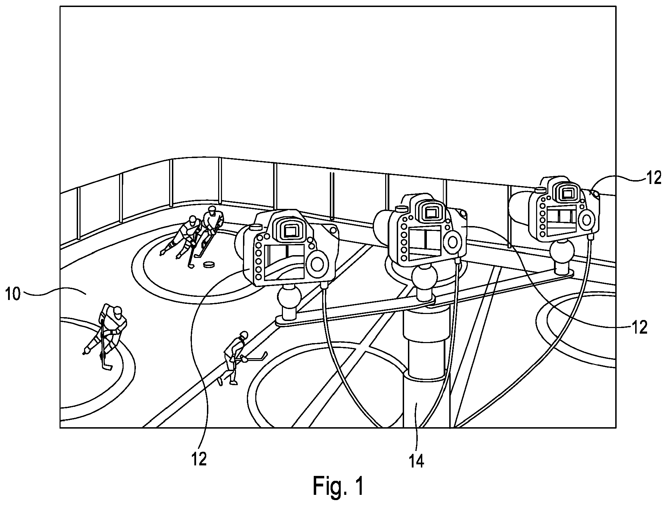

Turning to Figure 1, a portion of an arena 10 is shown in perspective. The arena includes exemplary features of a hockey stadium as an example although it should be clear from the present description that the arrangement of the present invention may be applied to a wide variety of arenas. At one side of the arena 10 is a set of three cameras 12 mounted near to one side of the arena 10, and mounted on a mounting 14. The cameras 12 have a field of view which is coincident with one another and includes a portion of the arena 10.

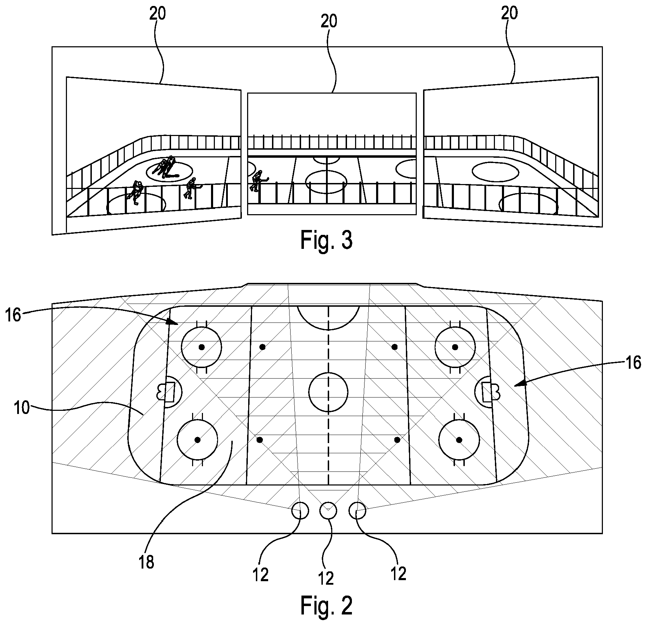

In Figure 2, a diagrammatic view of an arena 10 can be seen from above in quasi-plan view. To one side of the arena 10 are three cameras 12 located adjacent one another in line and parallel to one edge of the arena 10. In Figure 2 is also shown regions 16 which diagrammatically described fields of view. Each of the cameras 12 is shown with a region 16 of predominant field of view. However, the cameras 12 are selected to have a field of view encompassing substantially the whole arena 10. Some of the regions 16 of predominant field of view of respective cameras 12 overlap, although it will be clear that overlapping fields of view extend across substantially the whole of the arena 10. Also shown is a diagrammatic representation of a notional set of subdivisions as described above, shown as a grid arrangement 18.

In Figure 3, a set of representative views is shown on display screens 20 of views which might be derived from cameras 12 as shown in the other figures.

## Claims

1. A sports stadium comprising an arena (10), wherein the whole arena is divided into a set of notional subdivisions (18), the sports stadium having an imaging system comprising:
three cameras (12) mounted near to one side of the arena, and mounted on a mounting (14); and
a processing unit;
wherein the three cameras are each arranged to provide one or more images to the processing unit, each camera having a timer unit for providing a time marker associated with each image provided to the processing unit, the timer unit of each camera being synchronised with the corresponding timer unit of each other camera;
wherein the field of view of the three cameras is coincident, and wherein each field of view includes every notional subdivision of the arena;
wherein the processing unit is adapted to receive two or more images and a time marker from the said cameras and to provide an estimate of a location of an object within the arena by using the two or more images having a corresponding time marker, each of the two or more images being captured by a different one of said two or more cameras.

2. A sports stadium according to claim 1, wherein the cameras are arranged at discrete locations substantially within or adjacent the arena.

3. A sports stadium according to claim 1 or claim 2, wherein the cameras are arranged adjacent one another substantially parallel to an edge of the arena.

4. A sports stadium according to any preceding claim, wherein the processing unit comprises a programmable electronic computer.

5. A sports stadium according to claim 4, wherein the processing unit further comprises software adapted to derive an estimated location of an object by triangulation.

6. A sports stadium according to claim 4 or claim 5, wherein the processing unit is adapted to collate images according to the time marker associated with said images to generate a complex impression of at least a portion of the arena.

7. A sports stadium according to any preceding claim, wherein the timer unit in one or more of the cameras is connected to the processing unit.

8. A sports stadium according to claim 7, wherein the processing unit provides a means for synchronising the timer unit of different cameras.

9. A sports stadium according to claim 7 or 8, further comprising a central clock, adapted to provide a time signal or synchronising signal to a timer unit of one or more cameras and/or to the processing unit.

10. A sports stadium according to any of the preceding claims wherein the cameras and processing unit are connected together within a communications network.

11. A sports stadium according to claim 10, wherein the central clock is connected to the two or more cameras and the processing unit within a communications network.

12. A sports stadium according to claim 11 or claim 12, wherein the processing unit is adapted to receive information from at least one other device via the communications network.

13. A sports stadium according to claim 13, wherein the at least one other device comprises a GPS tracker and/or a fitness tracker and/or a beacons adapted to transmit information via the communications network.

## Patentansprüche

1. Sportstadion, das eine Arena (10) umfasst, wobei die gesamte Arena in eine Reihe fiktiver Unterteilungen (18) aufgeteilt ist, wobei das Sportstadion ein Bildgebungssystem aufweist, welches umfasst:
drei Kameras (12), die nahe einer Seite der Arena montiert und auf einer Halterung (14) montiert sind; und
eine Verarbeitungseinheit;
wobei die drei Kameras jeweils angeordnet sind, um der Verarbeitungseinheit ein oder mehrere Bilder bereitzustellen, wobei jede Kamera eine Zeitgebereinheit zum Bereitstellen einer Zeitmarkierung aufweist, die mit jedem Bild verknüpft ist, das der Verarbeitungseinheit bereitgestellt wird, wobei die Zeitgebereinheit jeder Kamera mit der entsprechenden Zeitgebereinheit jeder anderen Kamera synchronisiert ist;
wobei die Blickfelder der drei Kameras übereinstimmen, und wobei jedes Blickfeld jede fiktive Unterteilung der Arena beinhaltet;
wobei die Verarbeitungseinheit angepasst ist, zwei oder mehr Bilder und eine Zeitmarkierung von den Kameras zu empfangen, und eine Schätzung eines Standorts eines Objekts innerhalb der Arena durch Verwenden der zwei oder mehr Bilder bereitzustellen, die eine entsprechende Zeitmarkierung aufweisen, wobei jedes der zwei oder mehr Bilder von einer anderen der zwei oder mehr Kameras aufgenommen wird.

2. Sportstadion nach Anspruch 1, wobei die Kameras an einzelnen Standorten im Wesentlichen innerhalb oder neben der Arena angeordnet sind.

3. Sportstadion nach Anspruch 1 oder Anspruch 2, wobei die Kameras nebeneinander im Wesentlichen parallel zu einem Rand der Arena angeordnet sind.

4. Sportstadion nach einem vorstehenden Anspruch, wobei die Verarbeitungseinheit einen programmierbaren elektronischen Computer umfasst.

5. Sportstadion nach Anspruch 4, wobei die Verarbeitungseinheit weiter Software umfasst, die angepasst ist, einen geschätzten Standort eines Objekts durch Triangulation abzuleiten.

6. Sportstadion nach Anspruch 4 oder Anspruch 5, wobei die Verarbeitungseinheit angepasst ist, Bilder gemäß der mit den Bildern verknüpften Zeitmarkierung zu sortieren, um einen komplexen Eindruck von mindestens einem Teil der Arena zu erzeugen.

7. Sportstadion nach einem vorstehenden Anspruch, wobei die Zeitgebereinheit in einer oder mehreren der Kameras mit der Verarbeitungseinheit verbunden ist.

8. Sportstadion nach Anspruch 7, wobei die Verarbeitungseinheit ein Mittel zum Synchronisieren der Zeitgebereinheit verschiedener Kameras bereitstellt.

9. Sportstadion nach Anspruch 7 oder 8, das weiter eine Zentraluhr umfasst, die angepasst ist, einer Zeitgebereinheit einer oder mehrerer Kameras und/oder der Verarbeitungseinheit ein Zeitsignal oder Synchronisierungssignal bereitzustellen.

10. Sportstadion nach einem der vorstehenden Ansprüche, wobei die Kameras und die Verarbeitungseinheit innerhalb eines Kommunikationsnetzwerks miteinander verbunden sind.

11. Sportstadion nach Anspruch 10, wobei die Zentraluhr mit den zwei oder mehr Kameras und der Verarbeitungseinheit innerhalb eines Kommunikationsnetzwerks verbunden ist.

12. Sportstadion nach Anspruch 11 oder Anspruch 12, wobei die Verarbeitungseinheit angepasst ist, über das Kommunikationsnetzwerk Informationen von mindestens einer anderen Vorrichtung zu empfangen.

13. Sportstadion nach Anspruch 13, wobei die mindestens eine weitere Vorrichtung einen GPS-Tracker und/oder einen Fitness-Tracker und/oder ein Beacon umfasst, der/das angepasst ist, Informationen über das Kommunikationsnetzwerk zu übertragen.

## Revendications

1. Stade sportif comprenant une arène (10), dans lequel l'arène entière est divisée en un ensemble de subdivisions fictives (18), le stade sportif présentant un système de formation d'images comprenant :
trois caméras (12) montées à proximité d'un côté de l'arène et montées sur un support (14) ; et
une unité de traitement ;
dans lequel les trois caméras sont chacune agencées pour fournir une ou plusieurs images à l'unité de traitement, chaque caméra présentant une unité de minuterie pour fournir un marqueur temporel associé à chaque image fournie à l'unité de traitement, l'unité de minuterie de chaque caméra étant synchronisée avec l'unité de minuterie correspondante de chaque autre caméra ;
dans lequel le champ de vision des trois caméras coïncide, et dans lequel chaque champ de vision inclut chaque subdivision fictive de l'arène ;
dans lequel l'unité de traitement est conçue pour recevoir deux images ou plus et un marqueur temporel provenant desdites caméras et pour fournir une estimation d'un emplacement d'un objet dans l'arène en utilisant les deux images ou plus présentant un marqueur temporel correspondant, chacune des deux images ou plus étant capturée par une caméra différente parmi lesdites deux caméras ou plus.

2. Stade sportif selon la revendication 1, dans lequel les caméras sont agencées en des emplacements distincts sensiblement à l'intérieur ou à proximité de l'arène.

3. Stade sportif selon la revendication 1 ou la revendication 2, dans lequel les caméras sont agencées adjacentes les unes aux autres sensiblement parallèlement à un bord de l'arène.

4. Stade sportif selon une quelconque revendication précédente, dans lequel l'unité de traitement comprend un ordinateur électronique programmable.

5. Stade sportif selon la revendication 4, dans lequel l'unité de traitement comprend en outre un logiciel conçu pour déduire un emplacement estimé d'un objet par triangulation.

6. Stade sportif selon la revendication 4 ou la revendication 5, dans lequel l'unité de traitement est conçue pour rassembler des images selon le marqueur temporel associé auxdites images pour générer une impression complexe d'au moins une partie de l'arène.

7. Stade sportif selon une quelconque revendication précédente, dans lequel l'unité de minuterie dans une ou plusieurs des caméras est connectée à l'unité de traitement.

8. Stade sportif selon la revendication 7, dans lequel l'unité de traitement fournit un moyen pour synchroniser l'unité de minuterie de différentes caméras.

9. Stade sportif selon la revendication 7 ou 8, comprenant en outre une horloge centrale, conçue pour fournir un signal horaire ou un signal de synchronisation à une unité de minuterie d'une ou plusieurs caméras et/ou à l'unité de traitement.

10. Stade sportif selon l'une quelconque des revendications précédentes, dans lequel les caméras et l'unité de traitement sont connectées ensemble au sein d'un réseau de communication.

11. Stade sportif selon la revendication 10, dans lequel l'horloge centrale est connectée aux deux caméras ou plus et à l'unité de traitement au sein d'un réseau de communication.

12. Stade sportif selon la revendication 11 ou la revendication 12, dans lequel l'unité de traitement est conçue pour recevoir des informations d'au moins un autre dispositif via le réseau de communication.

13. Stade sportif selon la revendication 13, dans lequel le au moins un autre dispositif comprend un traceur GPS et/ou un moniteur d'activité physique et/ou des balises conçus pour transmettre des informations via le réseau de communication.
